Europäisches Patentamt

European Patent Office

Office européen des brevets

(11) Numéro de publication: **0 378 487**

**A1**

(12) # DEMANDE DE BREVET EUROPEEN

(21) Numéro de dépôt: **90420006.0**

(51) Int. Cl.⁵: **A01G 9/04, A01G 31/02**

(22) Date de dépôt: **04.01.90**

(30) Priorité: **09.01.89 FR 8900340**

(43) Date de publication de la demande:
**18.07.90 Bulletin 90/29**

(84) Etats contractants désignés:
**AT BE CH DE DK ES FR GB GR IT LI LU NL SE**

(71) Demandeur: **NOTEX S.A.**
**Rue de Verdun**
**F-69490 Pontcharra-sur-Turdine(FR)**

(72) Inventeur: **Ducol, Jean Paul**
**Les Terres - Les Sauvages**
**F-69170 Tarare(FR)**
Inventeur: **Lepage, Serge**
**Riverie**
**69490 Mornant(FR)**

(74) Mandataire: **Laurent, Michel et al**
**Cabinet LAURENT 20, rue Louis Chirpaz B.P. 32**
**F-69131 Ecully Cédex(FR)**

(54) **Nappe stabilisatrice à insert chauffant pour culture hors sol et pour plateforme de conteneur en culture protégée.**

(57) Matériau permettant la réalisation de surfaces pour culture hors sol et pour plateformes de conteneurs.

Il se **caractérise** en ce que :
- elle se présente sous la forme d'une nappe textile constituée par une structure réalisée sur un métier à tricoter type Rachel avec insertion de fils transversaux (2) et de fils longitudinaux (1), ces fils (1) et (2) étant disposés sans embuvage à l'intérieur d'une structure (3) à fils maillés, assurant leur maintien les uns par rapport aux autres et ;
- au moins une résistance chauffante (4), continue, est incorporée parallèlement aux fils transversaux (2) et/ou longitudinaux (1) à l'intérieur de la structure maillée (3) et ce, selon une séquence déterminée.

FIG.1

# NAPPE STABILISATRICE A INSERT CHAUFFANT POUR CULTURE HORS SOL ET POUR PLATEFORME DE CONTENEUR EN CULTURE PROTEGEE.

La présente invention concerne un nouveau type de matériau utilisable pour la réalisation de plateformes et/ou de zones de culture hors sol, pour lesquelles se pose notamment le problème de réaliser une surface qui sert non pas de terrain de culture proprement dit, mais d'élément support à des conteneurs renfermant la plante à cultiver.

Cette technique de culture hors sol nécessite, pour être mise en oeuvre, un important travail de génie civil, notamment pour transformer un sol de type agricole en zone de culture appropriée, de manière à créer la plateforme servant de support aux conteneurs.

En effet, pour obtenir ce type de surface, il convient tout d'abord de décaisser le sol existant, puis d'empierrer, compacter, niveler et stabiliser le terrain. La plupart du temps, il convient également d'empêcher l'enherbement, l'enracinement des plants cultivés à l'intérieur des conteneurs. Pour réaliser cette dernière fonction, à ce jour, on utilise très souvent des toiles tissées ou non tissées qui permettent de réaliser un paillage du sol.

La surface de culture ayant été réalisée pour l'exploitation, après mise en place des conteneurs, il est nécessaire, pour assurer la croissance des plantes, d'effectuer des opérations classiques d'arrosage, désherbage, distançage, nettoyage.. .

Pour cela, il convient donc de prévoir des zones de passage du personnel et de circulation des engins qui entraînent donc des tassements différentiels localisés et des orniérages profonds ainsi que la destruction du matériau de "paillage" qui a pu être rapporté sur le sol.

Enfin, dans ce type de culture, se pose le problème important de la protection contre le gel en période hivernale et en saison printannière, étant donné que les racines des plants ne sont pas protégées comme dans le cas d'une culture conventionnelle en pleine terre. Pour résoudre ce dernier problème, la seule solution proposée à ce jour consiste à réaliser des abris, couvertures, ce qui non seulement est très coûteux et nécessite une main d'oeuvre importante, mais donne également des résultats aléatoires au niveau agronomique et technique.

Or on a trouvé, et c'est ce qui fait l'objet de la présente invention, un matériau qui permet de réaliser de manière simple, efficace, des plateformes pour culture hors sol de plantes en conteneur, permettant de résoudre l'ensemble de ces problèmes et permettant de communiquer à ladite plateforme non seulement des caractéristiques mécaniques permettant la circulation et le passage d'engins lourds grâce à une meilleure répartition des charges, mais également favorise la culture par le fait qu'elle permet de mieux répartir l'humiditité, élimine les risques de gel par le fait qu'elle permet un réchauffement du sol si cela est souhaitable et enfin, peut, si cela est nécessaire, jouer le rôle d'élément complètement occultant.

D'une manière générale, le nouveau matériau selon l'invention permettant la réalisation de surfaces pour culture hors sol, est caractérisé en ce que :

- il se présente sous la forme d'une nappe textile constituée par une structure réalisée sur un métier à tricoter type Rachel, avec insertion de fils transversaux (dits "fils de trame") et de fils longitudinaux (dits "fils de chaîne"), ces fils de trame et de chaîne étant disposés sans embuvage à l'intérieur d'une structure à fils maillés assurant leur maintien les uns par rapport aux autres et,

- au moins une résistance chauffante, continue, est incorporée parallèlement aux fils longitudinaux et/ou transversaux à l'intérieur de la structure maillée, selon une séquence déterminée.

Au sens de la présente invention, par "résistances chauffantes continues", on entend le fait que l'élement chauffant est continu et est incorporé directement lors de la réalisation de l'étoffe, s'étend sur toute la longueur et/ou largeur de cette dernière. D'une manière générale, on peut dire que ces résistances chauffantes forment une structure similaire à celle faisant l'objet du brevet français 83 18974 (publication : 2555724). Dans la suite de la description, l'invention sera plus particulièrement décrite pour des réalisations dans lesquelles le ou les éléments chauffants sont disposés transversalement, mais il est évident que l'invention couvre également le cas où au moins une résistance chauffante est disposée longitudinalement.

Afin de pouvoir remplir les conditions exigées pour utiliser une telle nappe non seulement comme élément chauffant du sol comme cela était envisagé dans le brevet précité, mais également comme élément stabilisateur, et répartiteur des charges permettant éventuellement le passage d'engins roulants, conformément à l'invention :

- les fils longitudinaux et les fils transversaux (chaîne et trame) seront choisis parmi les fils présentant de bonnes performances mécaniques et sont disposés les uns par rapport aux autres sans embuvage ;

- la résistance chauffante a une structure telle qu'elle puisse s'allonger sans se rompre lors des déformations et présente donc une capacité d'allongement supérieure à celle de la structure textile ; à titre illustratif, comme résistance chauffante, on utilisera, par exemple, une résistance constituée par un fil conducteur enroulé en spirale autour d'une âme extensible, présentant une bonne résistance et une bonne tenue en température, cet ensemble complexe étant recouvert d'une gaine protectrice, par exemple extrudée. Par ailleurs, lors de l'utilisation du matériau, il est avantageux de le disposer sur le sol, de telle sorte que les fils longitudinaux se trouvent situés vers l'extérieur et que les fils transversaux se trouvent, quant à eux, en contact avec le sol.

En fonction des applications, des éléments additionnels peuvent également être incorporés à l'intérieur de la structure de base précitée. Ainsi, si pour certaines applications, on peut avoir un ensemble se présentant sous la forme d'une grille ajourée, les fils de trame et de chaîne étant maintenus espacés les uns par rapport aux autres, pour d'autres applications en vue, non seulement d'augmenter la résistance mécanique de la structure, mais également d'obtenir une occultation totale du sol, des trames et/ou chaînes additionnelles de remplissage peuvent être disposées entre les trames et chaînes de renforcement proprement dit. De telles trames et chaînes de remplissage seront avantageusement à base de fils gonflants, tels que exemple des fils texturés.

Par ailleurs, comme matière textile entrant dans la réalisation d'un tel matériau, on utilisera des fils textiles présentant une bonne résistance aux intempéries et aux ultra-violet, tels que par exemple des fils de polypropylène ou de polyéthylène.

L'invention et les avantages qu'elle apporte seront cependant mieux compris grâce aux exemples de réalisation donnés ci-après à titre indicatif mais non limitatif, et qui sont illustrés dans les schémas annexés dans lesquels :

    - les figures 1 et 2 sont respectivement des vues schématiques en plan et de côté selon le sens chaîne de l'armure (contexture) d'un matériau conforme à l'invention ;

    - la figure 3 est une reproduction du matériau obtenu avec l'armure faisant l'objet des figures 1 et 2;

    - les figures 4 et 5 sont des vues similaires aux figures 1 et 2 d'une variante d'un matériau conforme à l'invention dans laquelle, outre les fils de renfort longitudinaux et les fils chauffants, on incorpore les fils additionnels de remplissage permettant d'obtenir une nappe occultante ;

    - la figure 6 est une reproduction d'un matériau obtenu au moyen de l'armure faisant l'objet des figures 3 et 4 ;

    - la figure 7 est un schéma illustrant une forme de mise en oeuvre du matériau conforme à l'invention ;

    - les figures 8 et 9 sont respectivement des vues en élévation et de dessus montrant la manière dont est disposé le matériau par rapport aux plants à cultiver.

## Exemple 1 :

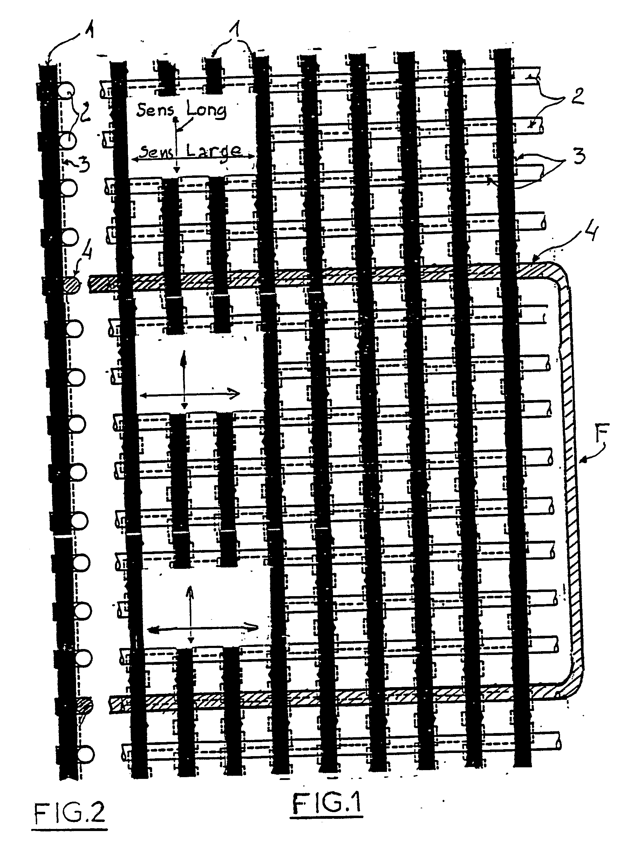

Sur un métier Rachel équipé d'un trameur, on réalise un matériau conforme à l'invention du type illustré par les figures 1,2 et 3.

Ainsi que cela ressort de ces figures, un tel matériau est constitué essentiellement de fils longitudinaux (fils de chaîne) (1) et de fils transversaux (trame) (2) se présentant sous la forme de deux nappes superposées. La liaison des fils (1) et (2) est obtenue de manière conventionnelle par une structure maillée (3) (représentée en pointillés) et qui travaille selon une armure faisant une combinaison de chaînettes et de trames de liaison.

Conformément à l'invention, de place en place, entre les fils de trame (1), est disposée une résistance chauffante (4), insérée de manière continue et qui forme donc, sur le bord de l'étoffe produite, un flotté de liaison (F) entre deux trames chauffantes consécutives. Si dans l'exemple de réalisation illustré, la résistance chauffante est insérée de place en place en substitution à un fil de trame de renfort (2), il pourrait être envisagé de déposer en parallèle à cette résistance chauffante un fil de renfort additionnel.

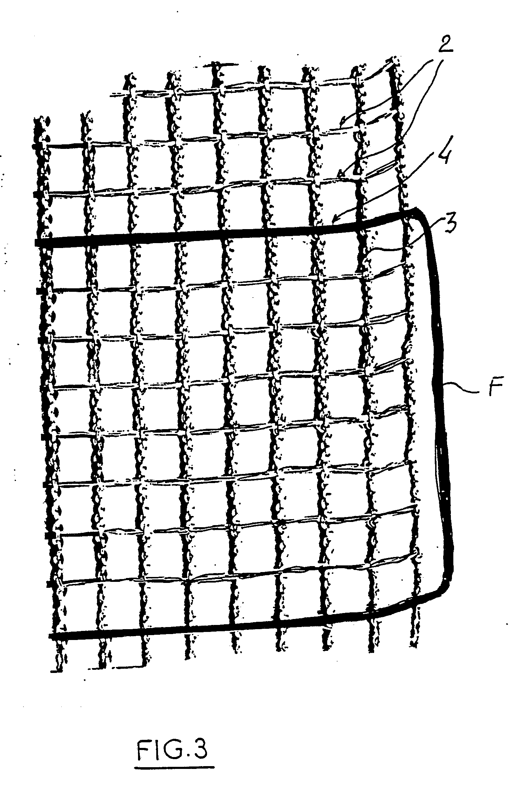

Pour réaliser un matériau illustré à la figure 3 et qui est obtenu à partir de l'armure faisant l'objet des figures 1 et 2, on utilise comme matière les constituants suivants :

- **comme fils longitudinaux et transversaux (1) et (2)** : des fils à base de polypropylène(ou polyéthylène) traités pour résister au rayonnement ultra-violet, haute ténacité, et constitués de huit bouts de 1100 Dtex chacun ;

- **comme fil de liaison (3)** : un fil de même nature, mais constitué par un seul bout de 1100 Dtex ;

- **comme fil chauffant** : un fil complexe comportant, d'une part, une âme centrale à base de fibres cellulosiques, résistantes, ayant une bonne tenue à la température et autour de laquelle est enroulée en spirale le fils conducteur proprement dit. Cet ensemble est protégé par une gaine extrudée. Un tel fil conducteur complexe présente la caractéristique de pouvoir suivre les déformations que peut subir le matériau conforme à l'invention lors de charges.

## Exemple 2 :

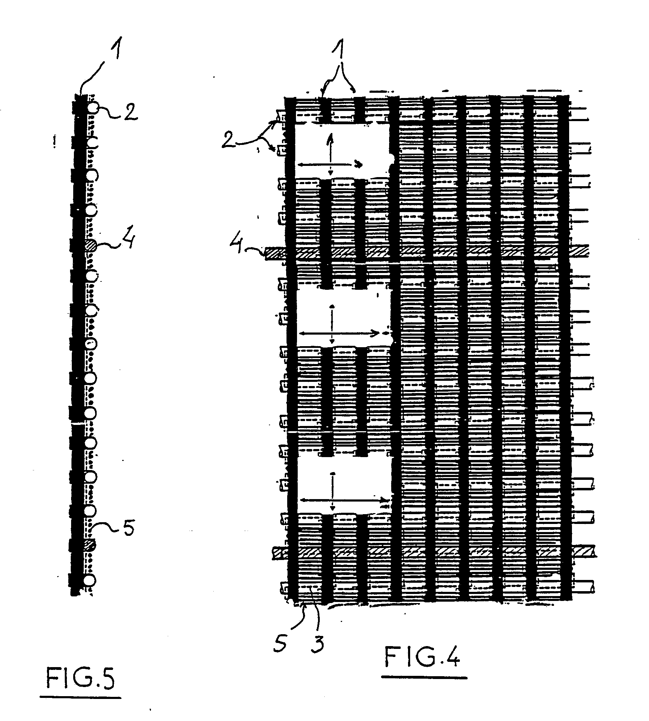

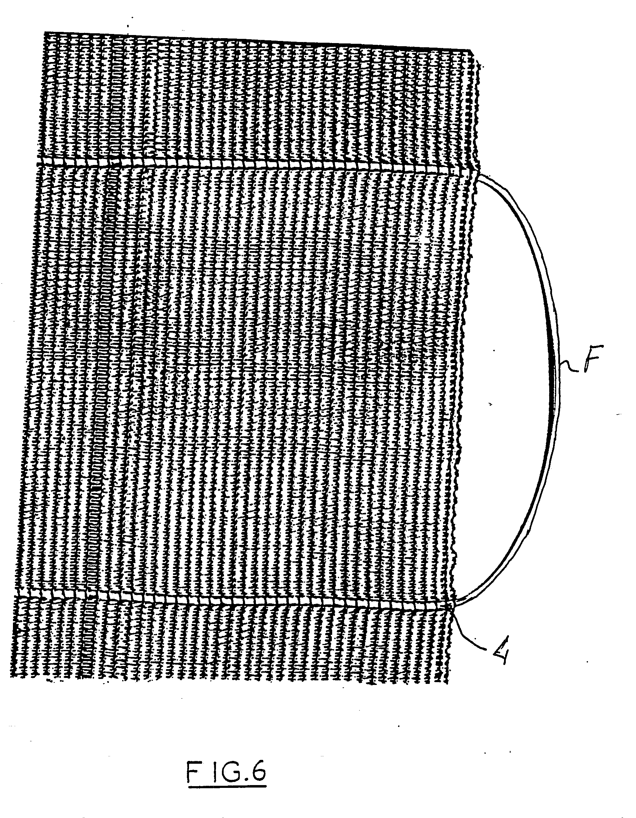

Cet exemple illustre une variante du matériau conforme à l'invention et est illustré par les figures 3, 4 et 5.

Par rapport au matériau faisant l'objet de l'exemple 1, en plus des fils de chaîne (1), de trame (2), de liaison (3) et de l'élément chauffant (4), on incorpore lors du tricotage des fils de remplissage additionnels (5). De tels fils de remplissage (5) sont disposés, dans la forme de réalisation illustrée, par des fils tramés soit de manière partielle, soit sur toute la largeur de l'article entre les trames de renforcement proprement dites (2). De tels fils de remplissage ont pour fonction de permettre une occultation des jours compris entre les fils chaînés et les fils de trame, de telle sorte que lorsque le matériau est mis en place, aucune pousse ne puisse se produire au travers desdits matériaux. Avantageusement, on utilisera comme fils de remplissage des fils gonflants, tels que par exemple des fils texturés à base de polypropylène.

Pour les deux exemples qui précèdent, il a été ainsi possible d'obtenir une nappe présentant une résistance dans les deux sens (sens long et sens travers) de 50 KN pour une déformation de 15 à 18 % et qui permet donc d'obtenir sans dommage le passage des engins de culture et de manutentions directement sur les nappes.

Par ailleurs, grâce à la structure particulière de l'élément chauffant entrant dans la composition d'une telle nappe, cet élément n'est pas détérioré lors de ces déformations.

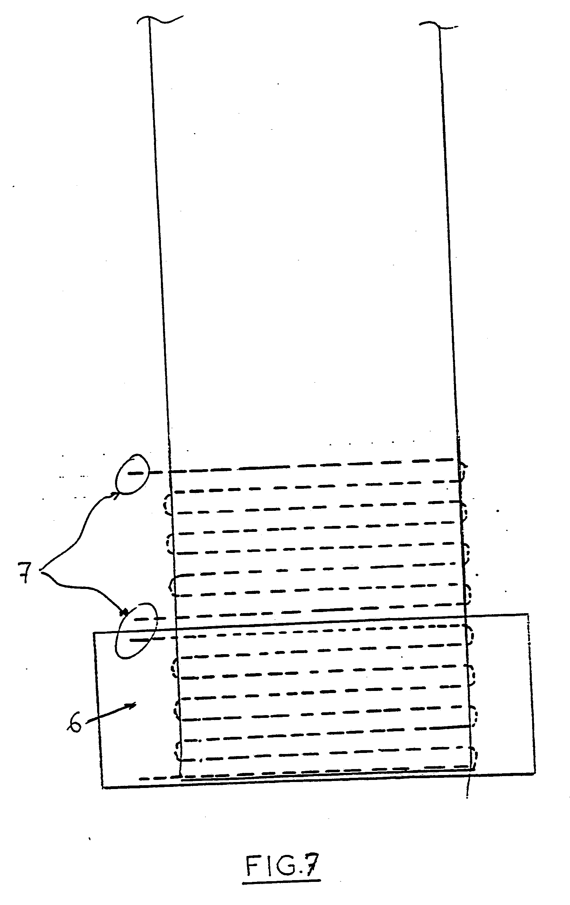

Le matériau conforme à l'invention se présente donc, en sortie de métier, sous la forme d'éléments de très grande longueur. Ils peuvent être commercialisés soit de manière continue, soit, de préférence, comme cela ressort de la figure 7, sous la forme de modules, désignés par la référence générale (6) de longueur déterminée. Lors de l'utilisation, on relie une pluralité de modules au moyen de connections électriques (7) en fonction de la longueur de la surface de culture à réaliser.

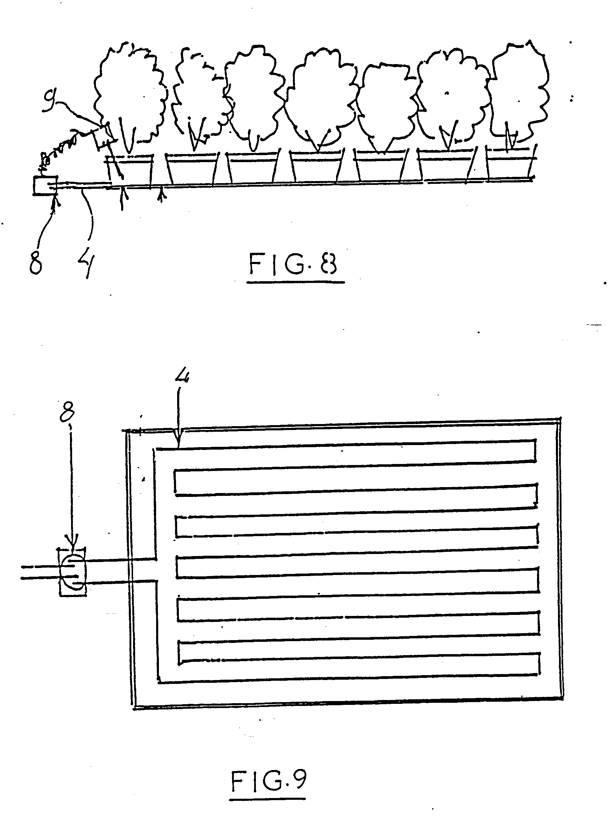

Les figures 8 et 9 illustrent la manière dont on réalise une surface de culture pour des plants (7) en conteneur. Il suffit, après avoir préparé le sol, de rapporter sur ce dernier la structure conforme à l'invention et de relier les extrémités de la résistance chauffante que comporte le matériau à un système d'alimentation (8). Ce système d'alimentation peut éventuellement être couplé à un thermostat (9) mettant en route automatiquement le système de chauffage.

Par rapport aux solutions antérieures, le matériau conforme à l'invention présente de très nombreux avantages et permet de réaliser facilement des plateformes et des zones de culture hors sol, compte tenu des caractéristiques techniques qu'il présente, à savoir notamment :
- du fait de ses caractéristiques mécaniques :
. de permettre une meilleure répartition des surcharges, d'où la possibilité de circulation et de passage d'engins lourds ;
. une amélioration de la portance du sol de base du fait de l'effet répartiteur ;
. une optimisation des surfaces occupées ;
. une facilité d'organisation dans l'acces sibilité de la plateforme ;
. de jouer le rôle de répartiteur d'humidité;
. du fait qu'il n'y a pas lieu de changer le sol de base, et qu'il est donc possible de revenir éventuelle ment à une vocation agricole pleine terre ; il n'y a donc pas de changement irréversible de la destination du sol initial ;
- compte tenu de l'incorporation des résistances chauffantes qu'il comporte, il permet également:
. de sauvegarder les productions hors sol et d'améliorer leur qualité ;
. de permettre la sauvegarde des productions en cas de gel et également de maintenir l'état végétatif de printemps, donc de modifier la précocité de démarrage et d'élargir la période de vente. De plus, il permet l'opportunité de cultures nouvelles non envisageables aujourd'hui, telles que par exemple des boutures, multiplication d'espèces sensibles.

Bien entendu, l'invention n'est pas limitée aux exemples de réalisation décrits précédemment, notamment en ce qui concerne la densité de la résistance chauffante à l'intérieur du matériau. Cette densité au mètre carré peut être adaptée ainsi que les puissances en fonction des applications.

**Revendications**

1/ Matériau permettant la réalisation de surfaces pour culture hors sol et pour plateformes de conteneurs, **caractérisé** en ce que :
- elle se présente sous la forme d'une nappe textile constituée par une structure réalisée sur un métier à tricoter type Rachel avec insertion de fils transversaux (2) et de fils longitudinaux (1), ces fils (1) et (2) étant disposés sans embuvage à l'intérieur d'une structure (3) à fils maillés, assurant leur maintien les uns par rapport aux autres et ;
- au moins une résistance chauffante (4), continue, est incorporée parallèlement aux fils transversaux (2) et/ou longitudinaux (1) à l'intérieur de la structure maillée (3) et ce, selon une séquence déterminée.

2/ Matériau selon la revendication 1, caractérisé en ce que les fils longitudinaux (1) et les fils transversaux (2) sont choisis parmi les fils présentant de bonnes performances mécaniques et sont disposés les uns par rapport aux autres sans embuvage, la résistance chauffante (4) incorporée parallèlement aux fils transversaux (2) ayant une structure telle qu'elle puisse s'allonger sans se rompre lors des déformations.

3/ Matériau selon l'une des revendications 1 et 2, caractérisé en ce que la résistance chauffante (4) est constituée par un fil conducteur enroulé en spirale autour d'une âme extensible, présentant une bonne résistance et une bonne température, cet ensemble complexe étant recouvert d'une gaine protectrice, par exemple extrudée.

4/ Matériau selon l'une des revendications 1 à 3, caractérisé en ce qu'il se présente sous la forme d'une grille ajourée, les fils longitudinaux (1) et transversaux (2) étant maintenus espacés les uns par rapport aux autres.

5/ Matériau selon l'une des revendications 1 à 3, caractérisé en ce qu'il comporte des fils de trame et/ou de chaîne additionnels de remplissage, disposés entre les fils longitudinaux (1) et/ou transversaux (2) afin de remplir l'espace compris entre lesdits fils.

6/ Matériau selon la revendication 5, caractérisé en ce que les fils de remplissage (5) disposés entre les fils longitudinaux (1) et/ou transversaux (2) sont à base de fils gonflants, tels que par exemple des fils texturés.

Sens Long

Sens Large

FIG.2

FIG.1

FIG.3

FIG.5

FIG.4

F

4

FIG.6

FIG.7

FIG. 8

FIG. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2363975 (TEXAC) <br> * page 1, ligne 30 - page 3, ligne 2; figure unique * <br> --- | 1, 2 | A01G9/04 <br> A01G31/02 |
| A | FR-A-2285805 (GULF STATES PAPER CORPORATION) <br> * revendication 1; figure 1 * <br> --- | 1 | |
| A | US-A-3606697 (EDEN) <br> * colonne 2, ligne 58 - colonne 3, ligne 51; figures 1, 5 * <br> --- | 1 | |
| A | GB-A-1018850 (COTTON) <br> * le document en entier * <br> ----- | 1 | |

DOMAINES TECHNIQUES
RECHERCHES (Int. Cl.5 )

A01G

Le présent rapport a été établi pour toutes les revendications

| Lieu de la recherche | Date d'achèvement de la recherche | Examinateur |
|---|---|---|
| LA HAYE | 06 AVRIL 1990 | HERYGERS J.J. |

EPO FORM 1503 03.82 (P0402)